# EUROPÄISCHE PATENTSCHRIFT

(11) **EP 2 303 691 B1**
(45) Veröffentlichungstag und Bekanntmachung des Hinweises auf die Patenterteilung: **11.12.2013**
(21) Anmeldenummer: 09772400.9
(22) Anmeldetag: 29.06.2009
(51) Int. Cl.: B64D 11/00

(54) **DISPOSITIONSZONE IN EINER FLUGZEUG-PASSAGIERKABINE**
DISPOSITION ZONE IN AN AIRCRAFT PASSENGER CABIN
ZONE AMÉNAGEABLE SITUÉE DANS UNE CABINE POUR PASSAGERS D'UN AVION

(30) Priorität: 30.06.2008 DE 102008031021; 30.06.2008 US 133458
(43) Veröffentlichungstag der Anmeldung: 06.04.2011
(73) Patentinhaber: Airbus Operations GmbH, 21129 Hamburg (DE)
(72) Erfinder: MOSLER, Michael, 31830 Plaisance du Touch (FR); ULBRICH-GASPAREVIC, Jovan, 25421 Pinneberg (DE); BREUER, Matthias, 22143 Hamburg (DE)
(74) Vertreter: Maiwald Patentanwalts GmbH
(86) Internationale Anmeldenummer: PCT/EP2009/058118
(87) Internationale Veröffentlichungsnummer: WO 2010/000700

(56) Entgegenhaltungen:
- EP-A1- 1 106 502
- EP-A1- 1 350 454
- DE-A1- 10 259 122
- US-A- 4 913 487
- US-A1- 2003 104 907
- US-A1- 2005 087 650
- US-A1- 2006 060 704
- US-A1- 2006 220 425
- US-A1- 2007 035 919

## Beschreibung

### Gebiet der Erfindung

Die Erfindung betrifft ein Flugzeug mit zumindest einer Passagierkabine, die zumindest einen optisch von der Passagierkabine getrennten, als Raumeinheit bezeichneten Türeingangsbereich bzw. Türausgangsbereich für die Passagiere und für die Flugbegleiter aufweist.

### Technologischer Hintergrund

Um Forderungen im Rahmen von Neuentwicklungen von Flugzeugen und den Anforderungen in nächster Zukunft gerecht zu werden ist es erforderlich, den Service und den Komfort zu verbessern und Flugzeuge beispielsweise mit Working-Areas auszustatten.

Aus der DE 43 01 681 C1 ist als Serviceeinrichtung eine sogenannte PSU-Baugruppe (Passenger Service Unit) für Flugzeuge bekannt, in der beispielsweise Leselampen, Hinweisschilder, Lautsprecher, Sitzreihennummerierung, optische Sicherheitsanzeigen sowie eine Stewardruftaste (Attendent Call Button) zusammengefasst sind. Diese PSU sind üblicherweise oberhalb der Passagiersitzreihen angeordnet. Die DE 199 26 782 A1 betrifft eine an einer Seitenwandverkleidung positionierte Serviceeinheit, die für einen separaten Raum, beispielsweise einen Schlafraum in einem Flugzeug bestimmt ist. Diese Serviceeinheit umfasst Anzeigeeinrichtungen wie Informationsdisplays, über die der Passagier informiert werden kann. Als Serviceangebot für die Passagiere ist gemäß der DE 10 2005 043 610 A1 in der Passagierkabine eines Flugzeugs ein modulares Monument angeordnet, das dem Passagier Animationselemente anbietet wie beispielsweise Fernseher oder Internetzugänge. Weiterhin kann das Monument für Serviceangebote in Form von Getränke- oder Snackautomaten von externen Unternehmen in Verbindung mit Franchise-Nutzungen betrieben werden. Nachteilig verringert die für das Modul erforderliche Standfläche den Passagierraum.

Das Telefonieren war während des Fluges mit dem Handy innerhalb des Flugzeugs verboten. Dementsprechend musste bis nach der Landung gewartet werden oder es mussten spezielle, hohe Gebühren verursachende Telefone benutzt werden. Durch neue technische Verfahren und durch geänderte Luftfahrtgesetze hat der Passagier ab dem Jahr 2009 die Möglichkeit, mit dem Handy aus dem Flugzeug zu telefonieren. Die Arbeitsbedingungen in den Business-Class-Sitzen sind aufgrund der Platzverhältnisse oftmals eingeschränkt. Ein effektives Arbeiten in der Tourist-Class ist unmöglich, wobei gleichzeitig die Geräuschkulisse durch Mitreisende störend ist. Ein weiterer Nachteil bei beiden Klassen ist auch, dass vertrauliche Dokumente während des Bearbeitens nicht vor neugierigen Blicken der Mitreisenden geschützt sind. In Passagierkabinen von Flugzeugen ist aus ökonomischen Gründen das Raumangebot relativ begrenzt. Der Eingangsbereich wird bisher nur für das Boarding und das Deboarding des Flugzeugs sowie den Catering-Service benutzt. In der eigentlichen Flugphase bleibt der Eingangsbereich ungenutzt. Der Nachteil herkömmlicher Kabinen besteht darin, dass für die überwiegend abgetrennten Eingangsbereiche ein relativ großer Raumanteil vorgehalten werden muss, der im Vergleich zu der gesamten Aufenthaltsdauer von Passagieren in der Passagierkabine nur kurzzeitig genutzt wird.

Die US 2007/035919 A1 beschreibt ein Einrichtungsmodul zur Informationsbereitstellung an Bord von Transportmitteln, wobei als Einbauort der Türbereich eines Passagierflugzeugs genannt ist. Das schrankartig gestaltete Modul verfügt über ein aufklappbares Türelement, so dass das Modul im ausgeklappten Zustand als Arbeitsplatz des Kabinenpersonals fungieren kann, wobei eine Nutzung durch einen Passagier selbst auch möglich ist. Die US 2006/060704 beschreibt eine medizinische Einheit in einer Flugzeugkabine, bei der Funktionselemente aus einem Modul herausgeklappt oder herausgeschoben werden können. Die US 2003/104907 beschreibt ein Fitnessgerät, zum Beispiel in Form eines Laufbandes, das während des Flugs im Eingangsbereich vor einer Tür aus einer Wand geklappt wird. Die US 4,913,487 beschreibt einen bifunktionalen Sitz, der einerseits als Sitz für Flugbegleiter dient und andererseits als Computerterminal verwendet werden kann, indem die Sitz- und Rücken- bzw. Armlehnen ein- und ausgeklappt werden können. Im Bereich oberhalb der Kopfstütze ist ein Bildschirm angeordnet; die Tastatur kann ausgeklappt werden, so dass eine stehende und eine kniende Bedienung möglich ist. Die DE 10259122 A1 beschreibt ein Spielmodul für Kinder, das während des Reiseflugs im Türbereich angeordnet werden kann. Die EP 1106502 A1 beschreibt eine faltbare Abtrennung mit integrierter Tür. Mittels der Abtrennung kann während des Flugs ein Türbereich abgetrennt und separat benutzt werden. Die EP 1350454 A1 beschreibt einen mechanisch angetriebenen Vorhang einer Umkleidekabine. Die US 2005/087650 A1 beschreibt die Anordnung von Passagiersitzen in einem Flugzeug im Zusammenhang mit ausklappbaren Tischen, wobei die Passagiersitze um den ausklappbaren Tisch herum angeordnet sein können. Die US 2006/220425 A1 beschreibt ausklappbare und ausschiebbare Tische oder Tabletts zur Benutzung bei Flugzeugsitzen.

### Zusammenfassung der Erfindung

Die Aufgabe der vorliegenden Erfindung besteht darin, das Service- und Komfortangebot für die Flugpassagiere durch die Nutzung von Räumlichkeiten in der Passagierkabine bzw. dem Türeingangsbereich zu erhöhen, die ansonsten während des Reiseflugs nicht genutzt werden.

Diese Problemstellung wird durch die Merkmale der Patentansprüche 1 und 8 gelöst. Vorteilhafte Ausführungsformen und Weiterbildungen der Erfindung und des Verfahrens gemäß der Erfindung sind in den jeweiligen Unteransprüchen angegeben.

Gemäß der vorliegenden Erfindung, wie in Anspruch 1 angegeben, können in der eine Dispositionszone bildenden Raumeinheit während der Flugphase mittels flexibler, variabler oder ortsveränderlicher Elemente oder Einrichtungen verschiedene Working Areas für unterschiedliche Nutzungen geschaffen werden. Durch die zumindest einem Monument oder einer Trennwand der Raumeinheit zugeordneten beweglichen Elemente können bevorzugt Service- und / oder Komforteinrichtungen für die Passagiere oder Flugbegleiter realisiert werden. Die Nutzung des Eingangsbereichs, eines bislang ungenutzten Abschnitts, als eine Dispositionszone während des Reiseflugs stellt somit einen zusätzlichen Raumgewinn dar. Vorteilhaft erfordert die eine Dispositionszone bildende Raumeinheit in der Passagierkabine keinen zusätzlichen Bauraum, da diese in einem bestehenden, während des Reiseflugs nicht genutzten bzw. einen Totraum bildenden Eintritts- und Austrittsbereich umsetzbar ist.

Außerdem ist durch die Erfindung vorteilhaft eine vergrößerte Kabinenvariabilität erzielbar, ohne Verlust an nutzbarer Sitzkapazität. Vorteilhaft brauchen zur Realisierung der Service- oder Komforteinrichtung gemäß der Erfindung keine Raumanteile der Passagierkabine vorgehalten werden. Die als Dispositionszone ausgelegte Raumeinheit kann folglich ohne Veränderung der Kabinenkonfiguration bereitgestellt werden. Gleichzeitig wird durch die Erfindung insbesondere das Angebot nach Zonen verbessert, in denen der Passagier ungestört einer persönlichen Tätigkeit nachgehen kann. Alternativ kann die Dispositionszone als ein zusätzlicher Arbeitsplatz für die Flugbegleiter ausgelegt werden, um dort beispielsweise Speisen für die Passagiere vorzubereiten. Die beweglichen oder ortsveränderlichen Elemente zur Realisierung der erfindungsgemäßen Working Areas bzw. Service- und / oder Komforteinrichtungen sind während des Reiseflugs so angeordnet, arretiert bzw. gesichert, dass diese auch bei auftretenden Turbulenzen des Flugzeugs in ihrer jeweiligen Funktionsstellung verharren. Andererseits sind die variablen Einrichtungen oder Elemente so in der Raumeinheit angeordnet, dass diese während der Start- und Landephase des Flugzeugs, in denen die Passagiere aus Sicherheitsgründen sich nicht von ihren Sitzen entfernen dürfen, platzsparend und sicher platziert sind. Aufgrund der kompakten Bauweise und einzelner klappbarer oder faltbarer Elemente ist weiterhin ein ungehinderter Einstieg und Ausstieg der Passagiere sichergestellt.

Die mit der Erfindung erzielten Vorteile bestehen weiterhin darin, dass dem Flugzeugbetreiber multifunktionelle Dispositionszonen angeboten werden, die bedarfsabhängig schnell durch eine einfache Handhabung für unterschiedliche Zwecke gestaltet werden können. Vorteilhaft sind die erfindungsgemäßen, als ein Baustein zum "Cabin Flexibility Concept" einzustufenden Maßnahmen kostengünstig realisierbar und außerdem als eine nachrüstbare Lösung einsetzbar. Die Erfindung ist mittels eines Modulsystems realisierbar, das problemlos auf die Belange des jeweiligen Flugzeugtyps, der Technologie und der Flugzeugbetreiber abgestellt werden kann. Vorteilhaft ist die erfindungsgemäße, als Dispositionszone nutzbare Raumeinheit mit wenigen Handgriffen von einer geschlossenen in eine geöffnete Position umwandelbar, um die Einrichtung nutzen zu können. Bei Bedarf bietet es sich an, mehr als eine erfindungsgemäße Raumeinheit in dem Flugzeug zu platzieren. Bedarfsabhängig hat der Flugzeugbetreiber außerdem die Möglichkeit, erfindungsgemäß gestaltete Raumeinheiten in unterschiedlichen Abschnitten der Passagierkabine oder Decks des Flugzeugs vorzusehen.

Gemäß einem weiteren vorteilhaften Ausführungsbeispiel ist die Raumeinheit als eine Telefonierzone bzw. Communication-Area vorgesehen, in der ein Passagier ungestört während des Fluges telefonieren kann, ohne dass vertrauliche Inhalte von Telefonaten zu Mitreisenden gelangen oder Mitreisende durch Telefonate gestört werden. Die als Telefonierzone nutzbare Raumeinheit verbessert die Kabinennutzbarkeit bezüglich der Kabinenvariabilität und gleichzeitig den Zusatzservice für die Flugreisenden. Der Passagier erhält durch die Erfindung die Möglichkeit einer ungestörten Nutzung des Handys, verbunden mit einer Erhöhung der Privatsphäre, wobei die restlichen Passagiere durch die Telefonbenutzung nicht gestört werden.

Gemäß einem weiteren vorteilhaften Ausführungsbeispiel ist zur Realisierung der Telefonierzone in einer Trennwand oder einem Monument der Raumeinheit ein ausziehbares, um eine Drehachse schwenkbares, eine Abschirmung darstellendes Modul integriert. Für die Abschirmung ist ein elastisches, faltbares Material vorgesehen, das in Verbindung mit bevorzugt aus CFK hergestellten Träger- oder Rahmenelementen gespannt bzw. gestrafft ist. Für die Abschirmung, die bei geschlossener Telefonierzone einen Kreisbogen von ca. 90° umschließt, eignet sich bevorzugt ein Vorhangstoff, wobei das verwendete Material die Kriterien bezüglich schwerentflammbarer Materialien der Brandklasse B1 (DIN 4102) zu erfüllen hat.

Gemäß einem weiteren vorteilhaften Ausführungsbeispiel ist zur Darstellung einer Office-Einheit in einer Trennwand oder in einem Monument der Raumeinheit eine ausklappbare Schreibtischplatte integriert, die sich zur Schaffung eines Arbeitsplatzes mittels eines Scharniers ausklappen lässt. Vorteilhaft ist die Schreibtischplatte bei Nichtbenutzung flächenbündig in der Trennwand oder dem Monument eingefügt. Im Zugriffsbereich der bevorzugt sitzenden Person an der Office-Einheit sind in der Trennwand oder dem Monument außerdem ein Stromanschluss, ein Internetanschluss für einen Laptop vorgesehen sowie ein Papierkorb. Weiterhin bietet es sich an, die Office-Einheit mit einer Stewardruftaste, Leseleuchte sowie Luftdüsen zu bestücken. Um die Privatsphäre zu verbessern, kann ergänzend zu der Schreibtischplatte eine in einer Trennwand oder in einem Monument der Raumeinheit integrierte Sichtschutzblende aus Stoff oder Plastik zugeordnet werden. Die sich vorteilhaft synchron zum Ausklappen der Schreibtischplatte, insbesondere nach dem Fächerprinzip straffende Sichtschutzblende ermöglicht eine gefahrlose Bearbeitung vertraulicher Dokumente.

Gemäß der Erfindung ist zur Darstellung eines Office-Moduls eine Trennwand oder ein Monument der Raumeinheit zweiteilig aufgebaut. In einem verschiebbaren, eine Mobilwand bildenden Seitenteil ist eine Schreibtischplatte sowie eine mitausfahrende Sitzvorrichtung so eingebracht, dass diese Bauteile in einer ausgefahrenen Position der Mobilwand selbsttätig eine die Trennwand und die Mobilwand verbindende Arbeitsstellung einnehmen. Zur Anpassung an unterschiedliche Körpergrößen ist sowohl die Sitzvorrichtung als auch die Schreibtischplatte vertikal einstellbar. Das in der Raumeinheit angeordnete Office-Modul schafft eine vorteilhafte ruhige Arbeitsatmosphäre bei gleichzeitig großzügigem Platzangebot und verbessert den Service und den Komfort für Geschäftsreisende in der Business-Class und der Tourist-Class. Weitere Elemente des Office-Moduls wie ein Ablagefach, ein Papierkorb mit oder ohne integrierten Reißwolf, ein Stromanschluss sowie ein Internetanschluss sind bevorzugt in der Trennwand der Raumeinheit angeordnet. Außerdem kann das Office-Modul bei Bedarf mit einem Computer, insbesondere einem Laptop ausgestattet werden. Die Mobilwand sowie die Trennwand, die das Office-Modul seitlich begrenzen, bieten einen wirksamen Schutz vor neugierigen Blicken. Weiterhin bietet das erfindungsgemäße Office-Modul die Möglichkeit, eine Schreibtischplatte mit zwei getrennten Schreibtischbereichen zu realisieren. Somit wird eine variable Nutzung der ansonsten unbenutzten Raumeinheit in dem Türeingangsbereich möglich. Vorteilhaft schließt das Office-Modul unterschiedliche Sicherheitseinrichtungen ein, wie eine Stewardruftaste (Attendent Call Button) oder eine optische Anzeige (Return to Seat Sign). Um den Benutzer des Office-Moduls bei plötzlich aufkommenden Turbulenzen in der Flugphase, dem Reiseflug ausreichend zu sichern, ist der Sitzvorrichtung ein Sicherheitsgurt zugeordnet. Nach erfolgter Benutzung des Office-Moduls kann die Mobilwand manuell, weitestgehend ohne Hilfsmittel an die Trennwand oder das Monument in die Ausgangsstellung verschoben werden.

Gemäß einem weiteren vorteilhaften Ausführungsbeispiel der vorliegenden Erfindung ist die Raumeinheit als Arbeitsplatz für die Flugbegleiter bzw. die Crew gestaltet. Bisherige Lösungen sahen vor, Folding Shelfes als Losteil, beispielsweise zwischen zwei Monumenten anzuordnen und die nach Gebrauch in einem separaten Stauraum verstaut wurden. Gemäß der Erfindung ist eine Integrative Folding Shelf Anwendung vorgesehen, wobei der Folding Shelf, der die Funktion eines Working Table oder einer Arbeitsplatte übernimmt, in einer Trennwand oder einem Monument der Raumeinheit integriert ist und der bei Bedarf ausgeklappt werden kann. Bei Nichtbenutzung ist der endseitig an Schienen der Trennwand geführte Folding Shelf abgeklappt angeordnet und flächenbündig in der Trennwand eingepasst. Zur Einstellung auf die gewünschte Arbeitshöhe wird der Folding Shelf in Z-Richtung entlang einer Schiene bis in die vorgesehene Arbeitshöhe verschoben und in der Endstellung arretiert. Zur Stabilisierung kann auch eine dem Folding Shelf zugeordnete Stütze ausgeklappt werden, über die eine Abstützung auf dem Kabinenboden erfolgt. Das innovative, keine Anpassung des Kabinenlayouts erfordernde Lösungskonzept verbessert und vereinfacht die Handhabung des Folding Shelfs, der schnell und sicher installiert werden kann. Weiterhin kann der erfindungsgemäße Folding Shelf als eine Nachrüstlösung eingesetzt werden.

Gemäß einem weiteren vorteilhaften Ausführungsbeispiel der vorliegenden Erfindung ist ein verlängerbarer, zweilagig aufgebauter Folding Shelf vorgesehen. Dazu ist in dem Folding Shelf ein linear ausziehbares, den Abstand zwischen beiden Trennwänden der Raumeinheit überbrückendes Zusatzelement integriert. Die Führung und Anordnung des Zusatzelementes in dem Folding Shelf erfolgt so, dass sich zwischen beiden Bauteilen weder eine breite Trennfuge noch ein Höhenversatz oder eine Stufe einstellt.

Gemäß einem weiteren vorteilhaften Ausführungsbeispiel der vorliegenden Erfindung ist die Raumeinheit als ein modularer Innenausstattungsbaustein gestaltet, der für unterschiedliche Flugzeugtypen eingesetzt werden kann. Das auch als Modulsystem zu bezeichnende Konzept ist erfindungsgemäß vorteilhaft typenübergreifend für mehrere Flugzeuge mit beispielsweise unterschiedlichen Passagierkabinen-Layouts verwendbar. Die Modulbauweise ermöglicht die Herstellung von Raumeinheiten bzw. übereinstimmenden Komponenten in größeren Stückzahlen mit der Folge einer Reduzierung der Stückkosten.

Gemäß einem weiteren vorteilhaften Ausführungsbeispiel der vorliegenden Erfindung sind zur Erzielung eines einheitlichen Raumeindrucks im Bereich der Raumeinheit alle variablen oder ortsveränderlichen Elemente zur Darstellung von Working Areas bzw. Service- und / oder Komforteinrichtungen gleich strukturiert und / oder gleichfarbig ausgelegt. Diese Maßnahme unterstützt ein einheitliches optisches Erscheinungsbild des als Raumeinheit bezeichneten Türeingangsbereichs. Andererseits kann erfindungsgemäß durch eine entsprechende farbliche Gestaltung oder Abstimmung, beispielsweise der Schreibtischplatte einer Office-Einheit eine attraktive Raumeinheit und ein positives Kabinenfeature erreicht werden.

Gemäß einem vorteilhaften Ausführungsbeispiel der vorliegenden Erfindung, wie in Anspruch 8 angegeben, ist ein Verfahren zur Gestaltung eines zumindest optisch von einer Passagierkabine eines Flugzeugs getrennten, als Raumeinheit bezeichneten Türeingangsbereichs vorgesehen. Dazu werden flexible, variable oder ortsveränderlich einsetzbare Elemente in die Raumeinheit eingebracht, die zumindest einer seitlichen Trennwand oder einem Monument zugeordnet sind. Mit diesen Elementen werden Working Areas geschaffen, die als Service- und / oder Komforteinrichtung ausgeführt, für Passagiere oder Flugbegleiter bestimmt sind.

Um Privatsphäre beim Telefonieren zu gewährleisten, kann eine ausklappbare Telefoniereinheit vorgesehen werden. Für ein uneinsehbares Arbeiten kann eine ausklappbare Schreibtischplatte vorgesehen werden.

### Kurze Beschreibung der Figuren

Im folgenden werden mit Hinweis auf die beigefügten Figuren vorteilhafte Ausführungsbeispiele der vorliegenden Erfindung beschrieben. Es zeigen:
- Figur 1,: einen Ausschnitt eines Flugzeugs in einer Schnittansicht;
- Figur 2a,: die Seitenansicht einer eine Raumeinheit seitlich begrenzenden Trennwand;
- Figur 2b,: eine als Telefonierzone gestaltete Raumeinheit in einer Draufsicht;
- Figur 2c,: die Telefonierzone gemäß Figur 2b in einer isometrischen Ansicht;
- Figur 3a,: die Vorderansicht einer Trennwand mit integrierter Schreibtischplatte als Office-Einheit;
- Figur 3b,: die Seitenansicht der Trennwand gemäß Figur 3a;
- Figur 4a,: die Vorderansicht der Trennwand gemäß Figur 3a mit ausgeklappter Schreibtischplatte;
- Figur 4b,: eine Seitenansicht der Trennwand gemäß Figur 4a;
- Figur 5a,: eine Trennwand gemäß Figur 4a mit seitlichen Sichtschutzblenden;
- Figur 5b,: eine Seitenansicht der Figur 5a;
- Figur 6,: in einer Perspektive ein Office-Modul;
- Figur 7a,: das Office-Modul gemäß Figur 6 in einer Seitenansicht in Ausgangsstellung;
- Figur 7b,: das Office-Modul mit einer teilweise verschobenen Mobilwand;
- Figur 7c,: das Office-Modul in einer ausgefahrenen Position;
- Figur 8a,: eine Vorderansicht einer Trennwand mit integriertem ausklappbaren Folding Shelf;
- Figur 8b,: eine Seitenansicht der Figur 8a;
- Figur 9a,: in einer Vorderansicht den teilweise ausgeklappten Folding Shelf;
- Figur 9b,: eine Seitenansicht der Figur 9a;
- Figur 9c,: die Einzelheit "E" gemäß Fig. 9b in einer vergrößerten Abbildung;
- Figur 10a,: der Folding Shelf ausgeklappt in einer Vorderansicht;
- Figur 10b,: eine Seitenansicht der Figur 10a;
- Figur 10c,: die Einzelheit "E" gemäß Fig. 10b in einer vergrößerten Abbildung;
- Figur 11a,: das Folding Shelf ausgeklappt mit einer Stütze in einer Seitenansicht;
- Figur 11b,: das verlängerte Folding Shelf ausgeklappt mit Stütze in einer Seitenansicht;
- Figur 11c,: eine Schnittansicht A-A gemäß Figur 11a des Folding-Shelfs;
- Figur 11d,: eine Schnittansicht B-B gemäß Figur 11c des Folding-Shelfs.

### Detaillierte Beschreibung vorteilhafter Ausführungsbeispiele

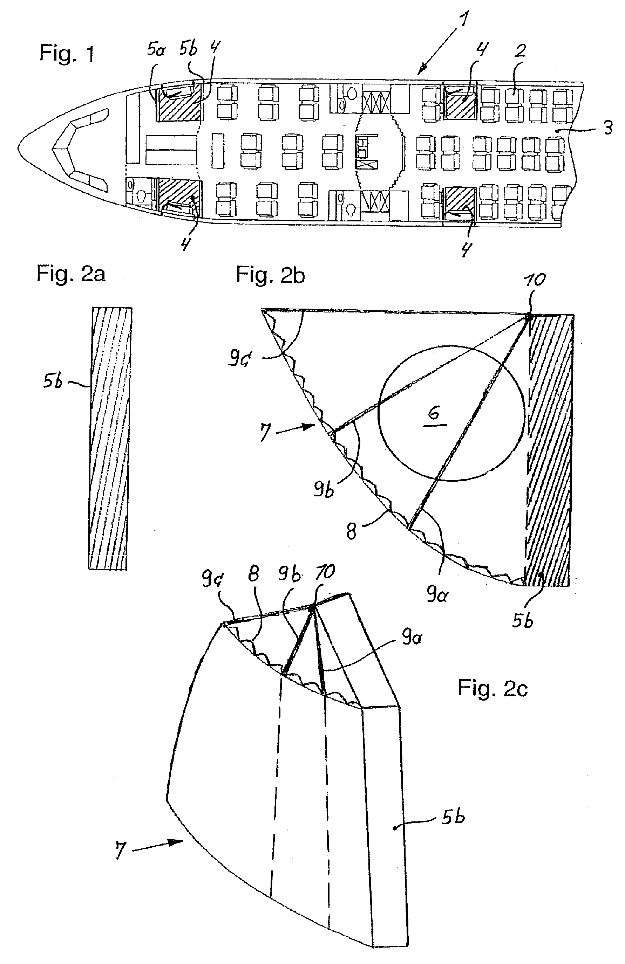

In der Beschreibung der Figuren 1 bis 11d weisen übereinstimmende oder sich entsprechende Bauteile und Elemente zumindest teilweise gleiche Bezugsziffern auf. Weiterhin ist für den Türeingangsbereich bzw. den Türausgangsbereich der Passagierkabine der einheitliche Begriff Raumeinheit verwendet.

Die Figur 1 zeigt in einem Ausschnitt den Aufbau eines Flugzeugs 1 in einer Schnittansicht und verdeutlicht dabei ein Sitzlayout von Passagiersitzen 2 in einer Passagierkabine 3 sowie die Anordnung bzw. Verteilung der als Raumeinheit 4 bezeichneten Türeingangs- bzw. Türausgangsbereiche, die jeweils schraffiert dargestellt sind. Gemäß der Erfindung bilden die Raumeinheiten 4 Dispositionszonen, die für unterschiedliche Service- und / oder Komforteinrichtungen genutzt werden können und die auch als Working Areas zu bezeichnen sind. Die Raumeinheiten 4 sind dabei seitlich von Trennwänden 5a, 5b begrenzt, die sich von einem Kabinenboden bis zu einer Kabinendecke erstrecken.

Die Figuren 2a bis 2c zeigen den Aufbau und die Anordnung einer in einer Raumeinheit 4 angeordneten Telefonierzone 6, die auch als Communication Area bezeichnet werden kann. Die Figur 2a zeigt in einer Draufsicht eine Trennwand 5b, in der wie in Figur 2b dargestellt, ein ausziehbares bzw. schwenkbares Modul 7 integriert ist. In der geöffneten Version erstreckt sich eine als Vorhang gestaltete Abschirmung 8 des Moduls 7 über nahezu 90 Grad und umschließt dabei die als Kreis dargestellte Telefonierzone 6. Über Rahmenelemente 9a bis 9c, die um eine Drehachse 10 schwenkbar sind, erfolgt beim Ausziehen des Moduls 7 eine Straffung der Abschirmung 8. Die Figur 2c zeigt das Modul 7 in Verbindung mit der Trennwand 5 in einer isometrischen Darstellung.

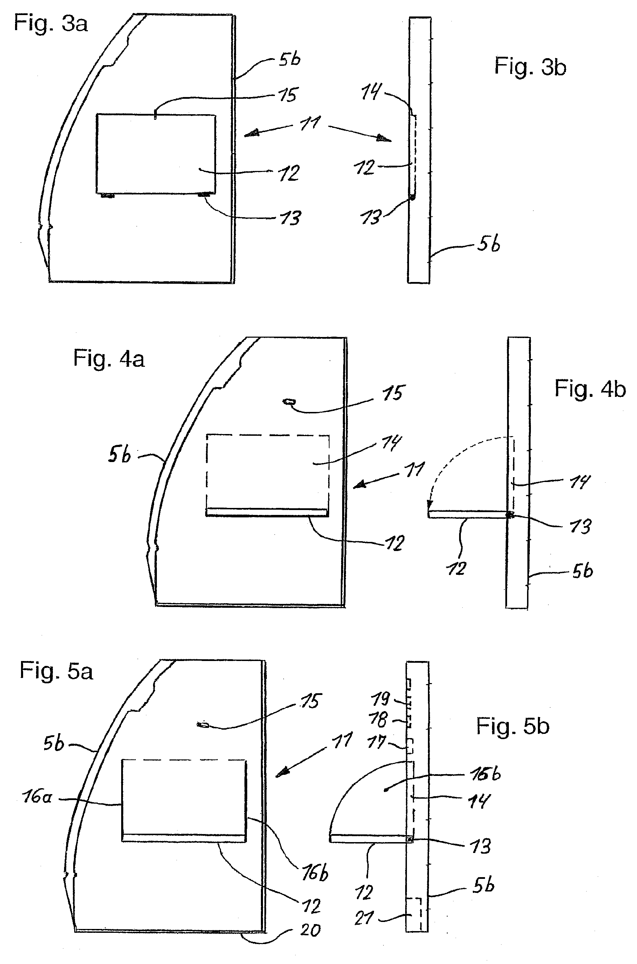

Eine Office-Einheit 11 in Verbindung mit der Trennwand 5b ist in den Figuren 3a bis 5b in verschiedenen Positionen und Ausführungen dargestellt. Die Figuren 3a, 3b zeigen eine in einen Integrationsträger (Trennwand auch als Partition bezeichnet oder Monument wie z.B. Lavatory, Galley etc.) 5b integrierte Schreibtischplatte 12. Der Integrationsträger 5a, weist eine der Fläche der Schreibtischplatte 12 entsprechende Ausnehmung 14 auf, in die wie in Figur 3b dargestellt die Schreibtischplatte 12 flächenbündig eingepasst ist. In der eingeklappten Position ist die über ein Scharnier 13 schwenkbare Schreibtischplatte 12 mittels einer Verriegelung 15 gesichert.

Die Figuren 4a, 4b zeigen die Office-Einheit 11 in einer Vorderansicht (Figur 4a) und einer Seitenansicht (Figur 4b), bei der die Schreibtischplatte 12 ausgeklappt in einer Arbeitsposition dargestellt ist.

Eine Variante zu den Figuren 4a, 4b zeigen die Figuren 5a, 5b, bei der die Schreibtischplatte 12 beidseitig von einer Sichtschutzblende 16a, 16b begrenzt ist. Ein bevorzugter Aufbau der Sichtschutzblenden 16a, 16b sieht vor, dass sich diese nach einem Fächerprinzip gestaltet, synchron zum Schwenken der Schreibtischplatte 12 straffen und einen wirksamen Sichtschutz bilden. In der Trennwand 5b der Office-Einheit 11 sind ergänzend ein Ablagefach 16, ein Stromanschluss 18, ein Internetanschluss 19 eingebracht sowie im Bereich eines Kabinenbodens 20 ein Papierkorb 21.

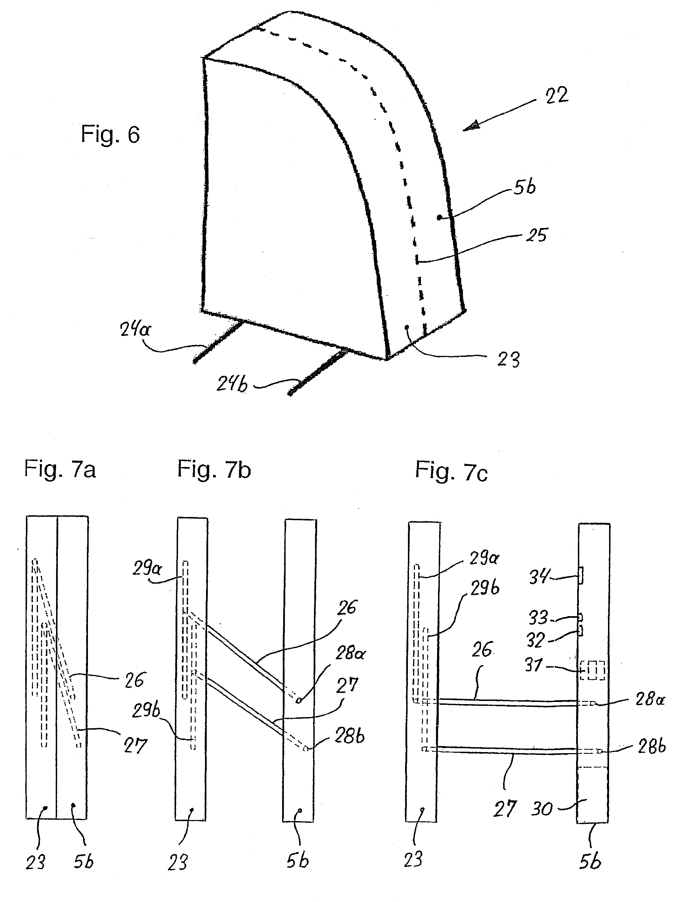

In der Figur 6 ist in einer Perspektive ein Office-Modul 22 abgebildet, bestehend aus einem Integrationsträger (Trennwand oder Monument wie Galley, Lavatory etc.) 5b, der eine als verschiebbare Vorderseite gestaltete Mobilwand 23 zugeordnet ist, deren Außenkontur zur Schaffung eines einheitlichen Raumeindrucks übereinstimmt mit der Außenkontur des Integrationsträgers 5b. Die Mobilwand 23 ist dabei über im Kabinenboden 20 eingesetzte Bodenschienen 24a, 24b verschiebbar. In einer Ausgangsstellung des Office-Moduls 22 ist lediglich eine Trennfuge 25 zwischen der Integrationsträger 5b und der auch als Integrationsträgervorderteil zu bezeichnenden Mobilwand 23 sichtbar.

Die Figuren 7a bis 7c zeigen in Vorderansichten das Office-Modul 22 mit unterschiedlichen Positionen der Mobilwand 23. Eine Ausgangsstellung der Mobilwand 23 ist in Figur 7a abgebildet, bei der die Schreibtischplatte 26 und die Sitzvorrichtung 27 übereinstimmend strichpunktiert schräg angeordnet dargestellt sind. Die Figur 7b zeigt die teilweise ausgefahrene Mobilwand 23 gegenüber der feststehenden Trennwand 5b, bei der die Schreibtischplatte 26 sowie die Sitzvorrichtung 27 über jeweils beabstandet angeordnete Gelenke 28a, 28b mit der Trennwand 5b sowie mit Längsführungen 29a, 29b mit der Mobilwand 23 verbunden sind.

Gemäß Figur 7c umfasst das Office-Modul 22 eine Schreibtischplatte 26, die parallel verlaufend zur Sitzvorrichtung 27 angeordnet ist. Zur Vervollständigung des einen Arbeitsplatz bildenden Office-Moduls 22 sind in der Trennwand 5b unterhalb der Sitzvorrichtung 27 ein Papierkorb 30 sowie oberhalb der Schreibtischplatte 26 in der Reihenfolge eine Ablage 31, ein Internetanschluss 32 sowie ein Stromanschluss 33 vorgesehen. Außerdem bietet es sich, das Office-Modul 22 mit einer Sicherheitsvorrichtung 34 auszustatten, die eine Stewardruftaste sowie eine optische Anzeige (Return to Seat Sign) beinhaltet.

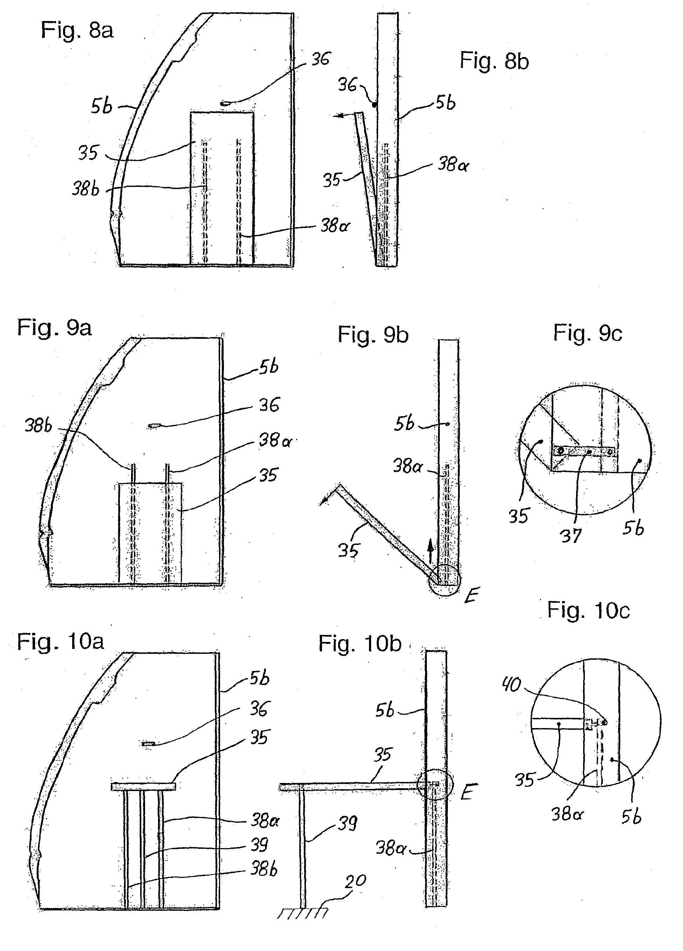

Die Figuren 8a bis 11d zeigen den Aufbau und die Gestaltung eines insbesondere für die Flugbegleiter, das Bordpersonal des Flugzeugs bestimmten Arbeitsplatzes innerhalb der Raumeinheit 4. Die Zeichnungen beziehen sich dabei insbesondere auf die Anordnung und Gestaltung eines Folding Shelfs 35.

In den Figuren 8a, 8b ist der auch als Ablage- oder Zwischenbrett zu bezeichnende Folding Shelf 35 in Verbindung mit der Trennwand oder Monument 5b dargestellt, das in der Ausgangsposition flächenbündig mit einer Frontseite der Trennwand / des Monuments 5b korrespondiert. Gemäß der Seitenansicht 8b ist der Folding Shelf 35 nach Lösung eines Arretierhebels 36 um ca. 10 Grad gegenüber der Trennwand/des Monuments 5b ausgeklappt.

In den Figuren 9a bis 9c ist der Folding Shelf 35 in einer um 45 Grad geneigten Position gegenüber der Trennwand/des Monuments 5b abgebildet. Die Figur 9c zeigt in einer vergrößerten Darstellung die Einzelheit "E", die ein in Z-Richtung verschiebbares Scharnier 37 zeigt, über das der Folding Shelf 35 in Verbindung mit zueinander beabstandeten Schienen 38a, 38b der Trennwand/des Monuments 5b bis zum Erreichen einer Arbeitshöhe vertikal verschiebbar ist. Diese vertikale Verschiebung kann synchron zu einer weiteren Schwenkbewegung des Folding Shelfs 35 erfolgen, verdeutlicht durch die zwei endseitigen Pfeilrichtungen an dem Folding-Shelf 35 gemäß Figur 9b.

Die Figuren 10a bis 10c zeigen den Folding Shelf 35 in einer End- oder Arbeitsposition in verschiedenen Ansichten. Diese Position wird erreicht, nachdem ein Arretierungshebel 40 gelöst wird und der Folding Shelf 35 ausgeklappt und in Z-Richtung geschoben in einer Endposition einrastet. Die Lage des Arretierhebels verdeutlicht die Figur 10c, in der das Detail "E" aus Fig. 10b vergrößert darstellt ist. Zur weiteren Stabilisierung des Folding Shelfs 35 kann dieses in der Arbeitsposition mittels einer ausklappbaren Stütze 39 auf dem Kabinenboden 20 abgestützt werden.

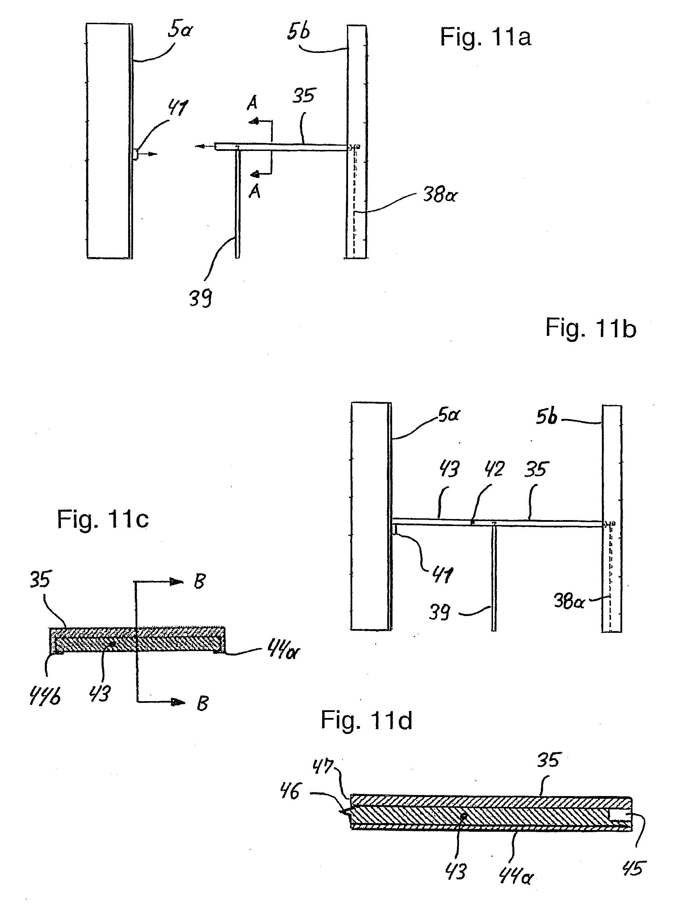

In den Figuren 11a bis 11d sind weitere Ausgestaltungen des Folding Shelfs 35 dargestellt, der von der Trennwand 5b bis zu der gegenüberliegenden Trennwand 5a verlängert werden kann. Der verlängerte Folding Shelf 35 ist wie in Figur 11a gezeigt endseitig über eine der Trennwand/des Monuments5a zugeordnete Aufnahme 41 abgestützt. Die Figur 11b zeigt ein vollständig die Trennwände/des Monuments 5a, 5b verbindendes Folding Shelf 35, wodurch sich in Verbindung mit einem Zusatzelement 43 eine bis auf eine Trennfuge 42 geschlossene Arbeitsfläche einstellt. Den Aufbau des ausziehbar gestalteten Folding-Shelfs 35 verdeutlichen die Figuren 11c, 11d. Das Folding-Shelf 35 im Querschnitt entsprechend der Schnittansicht A-A gemäß Figur 11a ist der Figur 11c zu entnehmen. Danach wird das Folding-Shelf 35 außenseitig von zwei Aufnahmen 44a, 44b begrenzt, in der ein das Folding-Shelf 35 verlängerndes Zusatzelement 43 längs verschiebbar geführt ist. Die Figur 11d zeigt eine Schnittansicht B-B gemäß Figur 11c und verdeutlicht dabei die sich über die gesamte Länge des Folding-Shelfs 35 erstreckende Aufnahme 44a sowie die endseitige Gestaltung des Zusatzelementes 43. Stirnseitig weist das Zusatzelement 43 eine Zentrierung 46 auf, über die sich eine formschlüssige Fixierung des Zusatzelementes 43 in der Trennwand/dem Monument 5a im Bereich der Aufnahme 41 einstellt. An der der Zentrierung 46 gegenüberliegenden Seite bildet das Zusatzelement 43 eine Aussparung 45, deren geometrische Form der Bauteilstärke des Folding-Shelfs 35 entspricht. Die Aussparung 45 hat die Aufgabe, dass bei einer Lageübereinstimmung zwischen einer Stirnseite 47 des Folding-Shelfs 35 und der Aussparung 45 das Zusatzelement 43 in Verbindung beispielsweise mit einem in Figur 11d nicht abgebildeten Federelement oder mit einer Zwangsführung das Zusatzelement 43 in vertikaler Richtung begrenzt verschoben wird zur Darstellung eines stufenfreien Übergangs im Bereich der Trennfuge 42.

Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen sind nicht als Einschränkung anzusehen.

### Bezugszeichenliste

- 1: Flugzeug
- 2: Passagiersitz
- 3: Passagierkabine
- 4: Raumeinheit
- 5a: Trennwand
- 5b: Trennwand
- 6: Telefonierzone
- 7: Modul
- 8: Abschirmung
- 9a: Rahmenelement
- 9b: Rahmenelement
- 9c: Rahmenelement
- 10: Drehachse
- 11: Office-Einheit
- 12: Schreibtischplatte
- 13: Scharnier
- 14: Ausnehmung
- 15: Verriegelung
- 16a: Sichtschutzblende
- 16b: Sichtschutzblende
- 17: Ablagefach
- 18: Stromanschluss
- 19: Internetanschluss
- 20: Kabinenboden
- 21: Papierkorb
- 22: Office-Modul
- 23: Mobilwand
- 24a: Bodenschiene
- 24b: Bodenschiene
- 25: Trennfuge
- 26: Schreibtischplatte
- 27: Sitzvorrichtung
- 28a: Gelenk
- 28b: Gelenk
- 29a: Längsführung
- 29b: Längsführung
- 30: Papierkorb
- 31: Ablage
- 32: Internetanschluss
- 33: Stromanschluss
- 34: Sicherheitsvorrichtung
- 35: Folding-Shelf
- 36: Arretierhebel
- 37: Scharnier
- 38a: Schiene
- 38b: Schiene
- 39: Stütze
- 40: Arretierhebel
- 41: Aufnahme
- 42: Trennfuge
- 43: Zusatzelement
- 44a: Aufnahme
- 44b: Aufnahme
- 45: Aussparung
- 46: Zentrierung
- 47: Stirnseite

## Patentansprüche

1. Flugzeug mit zumindest einer Passagierkabine (3), die zumindest einen optisch von der Passagierkabine (3) getrennten, als Raumeinheit (4) bezeichneten Türeingangsbereich bzw. Türausgangsbereich für die Passagiere und die Flugbegleiter aufweist, wobei die als eine Dispositionszone ausgelegte Raumeinheit (4) während einer Flugphase mittels flexibler, variabler oder ortsveränderlich einsetzbarer, zumindest einer Trennwand (5a, 5b) oder einem Monument zugeordneter Elemente unterschiedliche, als Service- und / oder als Komforteinrichtung gestaltete, für Passagiere oder Flugbegleiter bestimmte Working Areas bildet; **dadurch gekennzeichnet, dass** zur Darstellung eines Office-Moduls (22) eine Trennwand (5a, 5b) oder ein Monument der Raumeinheit (4) geteilt ist, wobei in einem verschiebbaren, eine Mobilwand (23) bildenden Seitenteil eine Schreibtischplatte (26) sowie eine Sitzvorrichtung (27) so eingebracht sind, dass diese Bauteile in einer ausgefahrenen Position der Mobilwand (23) selbsttätig eine Arbeitsstellung einnehmen.

2. Flugzeug nach Anspruch 1, **dadurch gekennzeichnet, dass** in zumindest einem Bauteil des Office-Moduls (22), der Mobilwand (23) oder der Trennwand (5a) ein Ablagefach (31), ein Papierkorb (30) mit oder ohne integrierten Reißwolf, ein Internetanschluss (32), ein Stromanschluss (33) sowie Sicherheitseinrichtungen vorgesehen sind.

3. Flugzeug nach Anspruch 1, **dadurch gekennzeichnet, dass** die Raumeinheit (4) als ein Arbeitsplatz für die Flugbegleiter gestaltet ist und dazu ein in Schienen (38a, 38b) der Trennwand (5a, 5b) oder einem Monument geführter, ausklappbarer Folding Shelf (35) bis in eine Arbeitshöhe verschiebbar und in einer Endposition arretierbar ist.

4. Flugzeug nach Anspruch 3, **dadurch gekennzeichnet, dass** der Folding Shelf (35) in einer Arbeits- oder Endposition über eine integrierte Stütze (39) auf einem Kabinenboden (20) abgestützt ist.

5. Flugzeug nach Anspruch 3, **dadurch gekennzeichnet, dass** der zweilagig aufgebaute Folding Shelf (35) mittels eines linear ausziehbaren Zusatzelementes (43) bis zu der gegenüberliegenden Trennwand (5a, 5b) der Raumeinheit (4) verlängert werden kann, wobei eine Führung des Zusatzelementes (43) eine Stufe im Bereich einer Trennfuge (42) zwischen dem Folding Shelf (35) und dem Zusatzelement (43) vermeidet.

6. Flugzeug nach einem der Ansprüche 1 bis 5, **dadurch gekennzeichnet, dass** zumindest einzelne variable oder ortsveränderliche Elemente der Raumeinheit (4), die zur Schaffung unterschiedlicher Working Areas bestimmt sind als ein modularer Innenausstattungsbaustein ausgeführt und gestaltet ist.

7. Flugzeug nach einem der Ansprüche 1 bis 6, **dadurch gekennzeichnet, dass** alle variablen oder ortsveränderlichen Elemente der Raumeinheit (4) gleich strukturiert und / oder gleichfarbig gestaltet sind.

8. Verfahren zur Gestaltung eines zumindest optisch von einer Passagierkabine (3) getrennten, als Raumeinheit (4) bezeichneten Türeingangsbereichs eines Flugzeugs (1), bei dem zur Darstellung von Working Areas ortsveränderliche Elemente einer Trennwand (5a, 5b) oder einem Monument der Raumeinheit (4) zugeordnet werden, die als Service- und / oder Komforteinrichtung gestaltet, durch Passagiere oder Flugbegleiter genutzt werden kann;
wobei zur Darstellung eines Office-Moduls (22) eine Trennwand (5a, 5b) oder ein Monument der Raumeinheit (4) geteilt ist, wobei in einem verschiebbaren, eine Mobilwand (23) bildenden Seitenteil eine Schreibtischplatte (26) sowie eine Sitzvorrichtung (27) so eingebracht sind, dass diese Bauteile in einer ausgefahrenen Position der Mobilwand (23) selbsttätig eine Arbeitsstellung einnehmen.

## Claims

1. An aircraft with at least one passenger cabin (3), which passenger cabin comprises at least one door entry area or door exit area for the passengers and the flight attendants that is visually separated from the passenger cabin (3) and is referred to as a space unit (4), wherein the space unit (4), which is realized as a disposition zone, forms different working areas that are designed as service and/or comfort facilities and are designated for passengers or flight attendants during a flight phase by elements that are flexible, variable or usable in a mobile fashion and are assigned to at least one partition wall (5a, 5b) or one monument; **characterized in that** a partition wall (5a, 5b) or a monument of the space unit (4) is divided in order to present an office module (22), wherein a desktop and a seat device (27) are arranged in a displaceable lateral part that forms a mobile wall (23) such that these components automatically assume a working position in an extended position of the mobile wall (23).

2. The aircraft according to claim 1, **characterized in that** a shelf (31), a waste paper basket (30) with or without integrated shredder, an internet connection (32), a power connection (33) as well as safety devices are provided in at least one component of the office module (22), the mobile wall (23) or the separating wall (5a).

3. The aircraft according to claim 1, **characterized in that** the space unit (4) is designed as a working place for the flight attendants and a fold-out folding shelf (35) guided in rails (38a, 38b) of the separating wall (5a, 5b) or a monument can be translated up to a working height and can be locked in an end position.

4. The aircraft according to claim 3, **characterized in that** the folding shelf (35) is supported on a cabin floor (20) by an integrated support (39) in a working or end position.

5. The aircraft according to claim 3, **characterized in that** the two-layer folding shelf (35) can be extended up to the opposite partition wall (5a, 5b) of the space unit (4) by a linearly extendable additional element (43), wherein a guide of the additional element (43) prevents a step in the region of a gap (42) between the folding shelf (35) and the additional element (43).

6. The aircraft according to any one of claims 1 to 5, **characterized in that** at least individual variable or mobile elements of the space unit (4) that are intended for creating different working areas are realized and designed as a modular interior fittings building block.

7. The aircraft according to any one of claims 1 to 6, **characterized in that** all variable or mobile elements of the space unit (4) are equally structured and / or designed in the same color.

8. A method for creating a door entry area of an aircraft that is referred to as space unit (4) and is at least visually separated from a passenger cabin (3), wherein mobile elements are assigned to a partition wall (5a, 5b) or a monument of the space unit (4) in order to realize working areas, which are designed as service- und/or comfort facilities that can be used by passengers or flight attendants;
wherein a partition wall (5a, 5b) or a monument of the space unit (4) is divided in order to present an office module (22), wherein a desktop (26) and a seat device (27) are arranged in a displaceable lateral part that forms a mobile wall (23) such that these components automatically assume a working position in an extended position of the mobile wall (23).

## Revendications

1. Aéronef comprenant au moins une cabine pour passagers (3) qui comporte au moins une zone d'entrée ou de sortie dotée d'une porte, dénommée espace (4), visuellement séparée de la cabine pour les passagers et personnel accompagnant, dans lequel l'espace (4) conçu comme une zone aménageable forme pendant une phase de vol, au moyen d'éléments flexibles, variables ou utilisables de manière mobile affectés au moins à une paroi de séparation (5a, 5b) ou à une structure, différentes zones de travail agencées sous la forme d'aménagement de service et/ou de confort destinées aux passagers ou au personnel accompagnant,
**caractérisé par le fait que**, pour représenter un module de bureau (22), une paroi de séparation (5a, 5b) ou une structure de l'espace (4) est divisée, un plateau de bureau (26) ainsi qu'un dispositif de sièges (27) étant insérés dans une partie latérale réglable formant une paroi mobile (23) de telle sorte que ces composants prennent automatiquement une position de travail dans une position sortie de la paroi mobile (23).

2. Aéronef selon la revendication 1, **caractérisé par le fait qu'**un casier de rangement (31), une corbeille à papier (30) avec ou sans déchiqueteuse intégrée, un raccordement internet (32), un raccordement électrique (33) ainsi que des équipements de sécurité sont prévus dans au moins un composant du module de bureau (22), de la paroi mobile (23) ou de la paroi de séparation (5a).

3. Aéronef selon la revendication 1, **caractérisé par le fait que** l'espace (4) est agencé sous la forme d'une place de travail pour le personnel accompagnant et dans ce but une étagère pliable (35) guidée dans des rails (38a, 38b) de la paroi de séparation (5a, 5b) ou dans une structure est réglable jusqu'à une hauteur de travail et peut être bloquée dans une position finale.

4. Aéronef selon la revendication 3, **caractérisé par le fait que** l'étagère pliante (35) est appuyée dans une position de travail ou terminale par l'intermédiaire d'un support intégré (39) sur un plancher de cabine (20).

5. Aéronef selon la revendication 3, **caractérisé par le fait que** l'étagère pliante (35) constituée de deux couches peut être prolongée au moyen d'un élément supplémentaire (43) linéairement extensible jusqu'à la paroi de séparation (5a, 5b) en regard de l'espace (4), un guidage de l'élément supplémentaire (43) évitant un niveau dans la zone d'un joint de séparation (42) entre l'étagère pliante (35) et l'élément supplémentaire (43).

6. Aéronef selon l'une des revendications 1 à 5, **caractérisé par le fait qu'**au moins différents éléments variables ou mobiles de l'espace (4), qui sont destinés à la création de différentes zones de travail, sont réalisés et agencés sous la forme d'un composant d'équipement intérieur modulaire.

7. Aéronef selon l'une des revendications 1 à 6, **caractérisé par le fait que** tous les éléments variables ou mobiles de l'espace (4) sont agencés avec une structure et/ou une couleur identique(s).

8. Procédé pour l'agencement d'une zone d'entrée dotée d'une porte, dénommée espace (4), d'un aéronef (1) séparée au moins visuellement d'une cabine pour passagers (3), dans lequel, pour représenter des zones de travail, des éléments mobiles d'une paroi de séparation (5a, 5b) ou d'une structure sont associés à l'espace (4), qui, agencé comme un aménagement de service et/ou de confort, peut être utilisé par des passagers ou personnel accompagnant ;
dans lequel une paroi de séparation (5a, 5b) ou une structure de l'espace (4) est divisée pour représenter un module de bureau (22), un plateau de bureau (26) ainsi qu'un dispositif de sièges (27) étant insérés dans une partie latérale réglable formant une paroi mobile (23) de telle sorte que ces composants prennent automatiquement une position de travail dans une position sortie de la paroi mobile (23).
